# EUROPEAN PATENT APPLICATION

(11) **EP 4 629 665 A1**
(43) Date of publication of application: **08.10.2025**
(21) Application number: 22966676.3
(22) Date of filing: 28.11.2022
(51) Int. Cl.: H04W 4/02, H04W 4/08, H04W 4/70, H04L 27/00

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: RGTH
(86) International application number: PCT/CN2022/134560
(87) International publication number: WO 2024/113071

(57) **Abstract**

A wireless communication method and device. The method comprises: an application function (AF) entity transmitting first information, wherein the first information is used for requesting the acquisition of information of a target Internet of Things (IoT) device; and the AF entity receiving second information, wherein the second information comprises the information of the target IoT device, the acquisition of which information is requested by the AF entity.

## Description

### TECHNICAL FIELD

Embodiments of this application relate to the field of communications, and more specifically, to a wireless communication method and a device.

### BACKGROUND

In a New Radio (New Radio, NR) system, as industry applications increase, there are increasingly more types of connected things and application scenarios, and higher requirements are imposed on costs and power consumption of a communications terminal. Application of a battery-free and low-cost Internet of Things device becomes a key to a cellular Internet of Things, to enrich types and a quantity of network-linked terminals and truly implement the Internet of Everything. Therefore, how to manage the Internet of Things device, for example, information exposure, is a problem that needs to be urgently solved.

### SUMMARY

This application provides a wireless communication method and a device, which are conducive to the implementation of on-demand management of an Internet of Things device.

According to a first aspect, a wireless communication method is provided, including: transmitting, by an application function AF entity, first information, where the first information is used to request to obtain information about a target Internet of Things IoT device; and receiving, by the AF entity, second information, where the second information includes the information about the target IoT device that the AF entity requests to obtain.

According to a second aspect, a wireless communication method is provided, including: receiving, by an Internet of Things IoT functional entity, first information, where the first information is used by an application function AF entity to request to obtain information about a target Internet of Things IoT device; and
transmitting, by the IoT functional entity, second information, where the second information includes the information about the target IoT device that the AF entity requests to obtain.

According to a third aspect, a wireless communication method is provided, including: receiving, by a first network node, first information transmitted by an application function AF entity, where the first information is used by the AF entity to request to obtain information about a target Internet of Things IoT device; and
transmitting, by the first network node, second information to the AF entity, where the second information includes the information about the target IoT device that the AF entity requests to obtain.

According to a fourth aspect, a wireless communication method is provided, including: receiving, by a second network node, first identity information of a target Internet of Things IoT device, and determining a target IoT functional entity based on the first identity information of the target IoT device, and/or mapping the first identity information of the target IoT device to second identity information of the target IoT device, where the first identity information is used by an application function AF entity to identify the target IoT device, and the second identity information is used by a network node to identify the target IoT device.

According to a fifth aspect, an application function AF entity is provided, and is configured to perform the method according to the first aspect or the implementations of the first aspect.

Specifically, the AF entity includes a functional module configured to perform the method according to the first aspect or the implementations of the first aspect.

According to a sixth aspect, an Internet of Things IoT functional entity is provided, and is configured to perform the method according to the second aspect or the implementations of the second aspect.

Specifically, the Internet of Things IoT functional entity includes a functional module configured to perform the method according to the second aspect or the implementations of the second aspect.

According to a seventh aspect, a network node is provided, and is configured to perform the method according to the third aspect or the implementations of the third aspect.

Specifically, the network node includes a functional module configured to perform the method according to the third aspect or the implementations of the third aspect.

According to an eighth aspect, a network node is provided, and is configured to perform the method according to the fourth aspect or the implementations of the fourth aspect.

Specifically, the network node includes a functional module configured to perform the method according to the fourth aspect or the implementations of the fourth aspect.

According to a ninth aspect, a communications device is provided, and includes a processor and a memory. The memory is configured to store a computer program. The processor is configured to invoke and run the computer program stored in the memory to perform the method according to any one of the first aspect to the fourth aspect or the implementations of the first aspect to the fourth aspect.

According to a tenth aspect, a chip is provided and is configured to implement the method according to any one of the first aspect to the fourth aspect or the implementations of the first aspect to the fourth aspect. Specifically, the chip includes a processor, configured to invoke a computer program from a memory and run the computer program, to cause a device on which the apparatus is installed to perform the method according to any one of the first aspect to the fourth aspect or the implementations of the first aspect to the fourth aspect.

According to an eleventh aspect, a computer-readable storage medium is provided and is configured to store a computer program. The computer program causes a computer to perform the method according to any one of the first aspect to the fourth aspect or the implementations of the first aspect to the fourth aspect.

According to a twelfth aspect, a computer program product is provided, and includes computer program instructions. The computer program instructions cause a computer to perform the method according to any one of the first aspect to the fourth aspect or the implementations of the first aspect to the fourth aspect.

According to a thirteenth aspect, a computer program is provided. When the computer program runs on a computer, the computer is caused to perform the method according to any one of the first aspect to the fourth aspect or the implementations of the first aspect to the fourth aspect.

In the foregoing technical solutions, an AF entity may request to obtain information about a target IoT device. For example, the AF entity may request the information about the target IoT device from an IoT functional entity through an NEF entity, or may directly request the information about the target IoT device from an IoT functional entity. Therefore, in embodiments of this application, the information about the target IoT device may be obtained by using an information exposure service provided by a 3GPP core network, and the obtained information about the target IoT device is exposed to the AF entity for use as required, so that on-demand management of the target IoT device can be implemented.

### BRIEF DESCRIPTION OF DRAWINGS

FIG. 1 is a schematic diagram of an architecture of a communications system according to an embodiment of this application.
FIG. 2 is a schematic diagram of a wireless communication method according to an embodiment of this application.
FIG. 3 is a schematic diagram of another wireless communication method according to an embodiment of this application.
FIG. 4 is a schematic diagram of still another wireless communication method according to an embodiment of this application.
FIG. 5 is a schematic diagram of yet another wireless communication method according to an embodiment of this application.
FIG. 6 is a schematic interaction diagram of a wireless communication method according to an embodiment of this application.
FIG. 7 is a schematic block diagram of an application function entity according to an embodiment of this application.
FIG. 8 is a schematic block diagram of an Internet of Things IoT functional entity according to an embodiment of this application.
FIG. 9 is a schematic block diagram of a network node according to an embodiment of this application.
FIG. 10 is a schematic block diagram of a network node according to an embodiment of this application.
FIG. 11 is a schematic block diagram of a communications device according to an embodiment of this application.
FIG. 12 is a schematic block diagram of a chip according to an embodiment of this application.

### DESCRIPTION OF EMBODIMENTS

The following describes the technical solutions in embodiments of this application with reference to the accompanying drawings in embodiments of this application. Apparently, the described embodiments are some rather than all of embodiments of this application. All other embodiments obtained by a person of ordinary skill in the art based on embodiments of this application without creative efforts shall fall within the protection scope of this application.

The technical solutions in embodiments of this application may be applied to various communications systems, such as a global system for mobile communications (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an advanced long term evolution (Advanced long term evolution, LTE-A) system, a new radio (New Radio, NR) system, an evolved NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial networks (Non-Terrestrial Networks, NTN) system, a universal mobile telecommunication system (Universal Mobile Telecommunication System, UMTS), a wireless local area network (Wireless Local Area Networks, WLAN) system, a wireless fidelity (Wireless Fidelity, WiFi) system, a fifth-generation communications (5th-Generation, 5G) system, or another communications system.

Generally, a conventional communications system supports a limited quantity of connections, which is easy to implement. However, with the development of communications technologies, a mobile communications system not only supports conventional communication, but also supports, for example, device to device (Device to Device, D2D) communication, machine to machine (Machine to Machine, M2M) communication, machine type communication (Machine Type Communication, MTC), vehicle to vehicle (Vehicle to Vehicle, V2V) communication, or vehicle to everything (Vehicle to every thing, V2X) communication, and the like. Embodiments of this application may also be applied to these communications systems.

Optionally, a communications system in embodiments of this application may be applied to a carrier aggregation (Carrier Aggregation, CA) scenario, a dual connectivity (Dual Connectivity, DC) scenario, or a standalone (Standalone, SA) networking scenario.

Optionally, the communications system in embodiments of this application may be applied to an unlicensed spectrum, and the unlicensed spectrum may also be considered as a shared spectrum. Alternatively, the communications system in embodiments of this application may be applied to a licensed spectrum, and the licensed spectrum may also be considered as a non-shared spectrum.

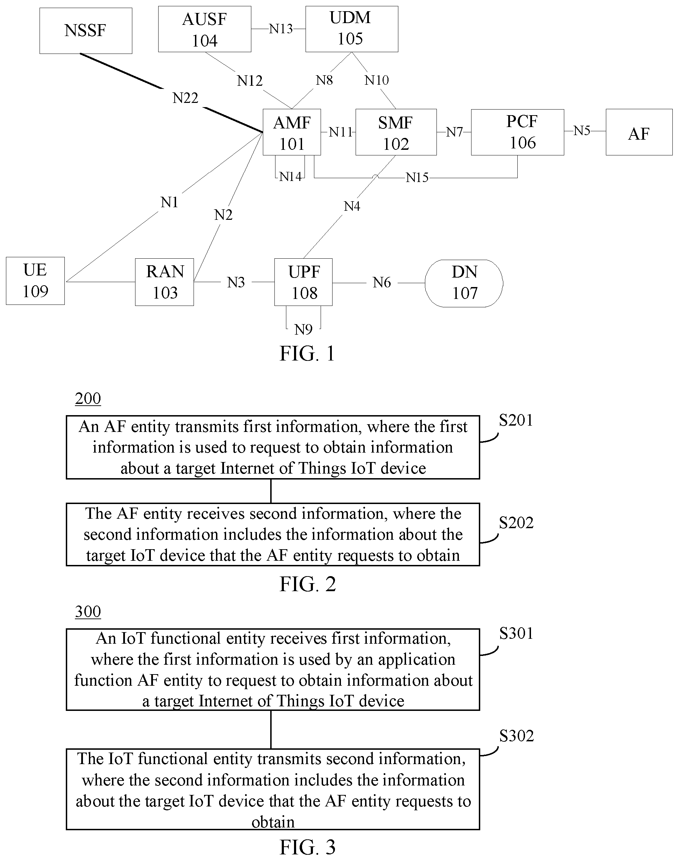

FIG. 1 is a schematic diagram of an architecture of a communications system according to an embodiment of this application. As shown in FIG. 1, the communications system includes an access and mobility management function (Access and mobility management function, AMF) 101, a session management function (Session Management Function, SMF) 102, a radio access network (Radio Access Network, RAN) 103, an authentication server function (Authentication Server Function, AUSF) 104, unified data management (Unified Data Management, UDM) 105, a policy control function (Policy Control function, PCF) 106, a data network (Data Network, DN) 107, a user plane function (User Plane Function, UPF) 108, and user equipment (User Equipment, UE) 109.

The UE 109 is connected to the AMF 101 through an N1 interface, and the UE 109 is connected to the RAN 103 by using a radio resource control (Radio Resource Control, RRC) protocol. The RAN 103 is connected to the AMF 101 through an N2 interface, and the RAN 103 is connected to the UPF 108 through an N3 interface. A plurality of UPFs 108 are connected through an N9 interface, the UPF 108 is connected to the DN 107 through an N6 interface, and the UPF 108 is connected to the SMF 102 through an N4 interface. The SMF 102 is connected to the PCF 106 through an N7 interface, the SMF 102 is connected to the UDM 105 through an N10 interface, and the SMF 102 is connected to the AMF 101 through an N11 interface. A plurality of AMFs 101 are connected through an N14 interface, the AMF 101 is connected to the UDM 105 through an N8 interface, the AMF 101 is connected to the AUSF 104 through an N12 interface, and the AMF 101 is connected to the PCF 106 through an N15 interface. The AUSF 104 is connected to the UDM 105 through an N13 interface. The AMF 101 and the SMF 102 obtain user subscription data from the UDM 105 through the N8 interface and the N10 interface, respectively, and obtain policy data from the PCF 106 through the N15 interface and the N7 interface, respectively. The SMF 102 controls the UPF 108 through the N4 interface.

The RAN 103 (which is alternatively referred to as an access network device) is an access device used for access of the UE 109 to the network architecture in a wireless manner, and is mainly responsible for radio resource management on an air interface side, quality of service (quality of service, QoS) management, data compression and encryption, and the like.

In some embodiments of this application, the access network device may be a device configured to communicate with a mobile device. The access network device may be an access point (Access Point, AP) in a WLAN, a base transceiver station (Base Transceiver Station, BTS) in GSM or CDMA, a NodeB (NodeB, NB) in WCDMA, an evolved Node B (Evolutional Node B, eNB or eNodeB) in LTE, a relay station or an access point, a vehicle-mounted device, a wearable device, an access network device (gNB) in an NR network, an access network device in a future evolved PLMN network, an access network device in an NTN network, or the like.

By way of example rather than limitation, in some embodiments of this application, the access network device may have a mobility feature. For example, the access network device is a mobile device. Optionally, the access network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. Optionally, the access network device may alternatively be a base station disposed on a location such as land or water.

In embodiments of this application, the access network device may provide a service for a cell. A terminal device communicates with the access network device by using a transmission resource (for example, a frequency domain resource or a spectrum resource) used by the cell. The cell may be a cell corresponding to the access network device (for example, a base station). The cell may belong to a macro station or may belong to a base station corresponding to a small cell (Small cell). The small cell herein may include a metro cell (Metro cell), a micro cell (Micro cell), a pico cell (Pico cell), a femto cell (Femto cell), or the like. These small cells are characterized by a small coverage range and low transmit power, and are applicable to providing a high-rate data transmission service.

In some embodiments of this application, the AMF 101, the SMF 102, the AUSF 104, the UDM 105, the PCF 106, the DN 107, and the UPF 108 are network elements of a core network (a core network network element for short).

The AMF network element may be configured to manage access of a terminal to a core network, for example, location update of the terminal, network registration, access control, mobility management of the terminal, and attachment and detachment of the terminal. In a case of providing a service for a session of the terminal, the AMF network element may further provide storage resources of a control plane for the session, so as to store a session identifier, an SMF network element identifier associated with the session identifier, and the like.

The SMF network element may be configured to: select a user plane network element for the terminal, redirect a user plane network element for the terminal, allocate an internet protocol (internet protocol, IP) address to the terminal, establish a bearer (also referred to as a session) between the terminal and the UPF network element, modify and release a session, and control QoS.

The AUSF is configured to: receive an identity authentication request for the terminal from the AMF, request a key from the UDM, and then forward a delivered key to the AMF for authentication processing.

The UDM includes functions such as generation and storage of user subscription data, and authentication data management, and supports interaction with an external third-party server. The PCF network element is configured to provide a policy for the AMF network element and the SMF network element, for example, a QoS policy or a slice selection policy.

The DN may provide a data service for a user in an IP multi-media service (IP multi-media service, IMS) network or the Internet. There may be a plurality of types of application servers (application server, AS) in the DN, and different application services are provided, such as an operator service, an Internet access service, or a third-party service. The AS may implement a function of the application function (Application Function, AF).

The UPF network element is mainly responsible for user data transmission. Other network elements may be referred to as control plane function network elements, and are mainly responsible for certification, authentication, registration management, session management, mobility management, policy control, and the like, so as to ensure reliable and stable user data transmission.

The UPF network element may be configured to forward and receive data of the terminal. For example, the UPF network element may receive service data from the data network, and transmit the service data to the terminal through the access network device. The UPF network element may further receive user data from the terminal through the access network device, and forward the user data to the data network. Transmission resources allocated and scheduled by the UPF network element to the terminal are managed and controlled by the SMF network element. Bearers between the terminal and the UPF network element may include: a user plane connection between the UPF network element and the access network device, and a channel established between the access network device and the terminal. The user plane connection is a quality of service (quality of service, QoS) flow (flow) that may be established between the UPF network element and the access network device for data transmission.

The AF network element is configured to interact with the core network network element to support routing of application data.

In some embodiments of this application, the user equipment (User Equipment, UE) may also be referred to as a terminal device, an access terminal, a subscriber unit, a subscriber station, a mobile station, a mobile console, a remote station, a remote terminal, a mobile device, a user terminal, a terminal, a wireless communications device, a user agent, a user apparatus, or the like.

The terminal device may be a station (STATION, ST) in a WLAN, or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device or any other processing device connected to a wireless modem, a vehicle-mounted device, a wearable device, a terminal device in a next generation communications system such as an NR network or a future evolved public land mobile network (Public Land Mobile Network, PLMN), or the like.

In embodiments of this application, the terminal device may be deployed on land, including being indoors or outdoors, handheld, wearable, or vehicle-mounted. The terminal device may also be deployed on water (for example, on a ship), or may be deployed in the air (for example, on an airplane, an air balloon, or a satellite).

In embodiments of this application, the terminal device may be a mobile phone (Mobile Phone), a tablet computer (Pad), a computer with a wireless transceiver function, a virtual reality (Virtual Reality, VR) terminal device, an augmented reality (Augmented Reality, AR) terminal device, a wireless terminal device in industrial control (industrial control), a wireless terminal device in self-driving (self driving), a wireless terminal device in remote medical (remote medical), a wireless terminal device in smart grid (smart grid), a wireless terminal device in transportation safety (transportation safety), a wireless terminal device in smart city (smart city), a wireless terminal device in smart home (smart home), or the like.

By way of example rather than limitation, in embodiments of this application, the terminal device may alternatively be a wearable device. The wearable device may also be referred to as an intelligent wearable device, and is a general term for wearable devices such as glasses, gloves, watches, clothes, and shoes that are intelligently designed and developed based on daily wearing by using a wearable technology. The wearable device is a portable device that can be directly worn or integrated into clothes or accessories of a user. In addition to being a hardware device, the wearable device can also realize various functions through software support, data interaction, and cloud interaction. In a broad sense, wearable smart devices may include a full-featured and large-sized device that can provide full or partial functions without relying on a smart phone, for example, a smart watch or smart glasses, and devices that focus on only a specific type of application function and need to cooperate with another device such as a smart phone for use, for example, various smart bracelets and smart jewelries for physical sign monitoring.

It should be noted that the network architecture of the communications system shown in FIG. 1 does not constitute a limitation on a network architecture of the communications system in embodiments of this application. In specific implementation, the communications system may further include more or fewer network elements than those shown in FIG. 1, combine some network elements, and so on. It should be understood that the RAN in FIG. 1 may also be represented by AN.

For example, the communications system shown in FIG. 1 may further include a network exposure function (Network Exposure Function, NEF) and the like, and may be connected to another network element in the communications system shown in FIG. 1 through corresponding interfaces. The NEF network element is configured to: provide a network capability, expose an event, and receive related external information.

It should be understood that in embodiments of this application, a device having a communication function in a network/system may be referred to as a communications device. The communications system shown in FIG. 1 is used as an example. The communications device may include an access network device (for example, the RAN 103) having a communication function, a core network network element (for example, the PCF 106), and the UE 109.

It should be understood that the terms "system" and "network" may often be used interchangeably in this specification. In this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that, the "indication" mentioned in embodiments of this application may be a direct indication or an indirect indication, or indicate an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In descriptions of embodiments of this application, the term "corresponding" may mean that there is a direct or indirect correspondence between two elements, or that there is an association relationship between two elements, or that there is a relationship of "indicating" and "being indicated", "configuring" and "being configured", or the like.

In embodiments of this application, "predefining" may be implemented by pre-storing corresponding code, tables, or other forms that may be used to indicate related information in devices (for example, including a terminal device and a network device), and a specific implementation thereof is not limited in this application. For example, being pre-defined may refer to being defined in a protocol.

It should be understood that the network device in embodiments of this application may include an access network device and a core network device.

In embodiments of this application, the "protocol" may indicate a standard protocol in the communication field, which may include, for example, an LTE protocol, an NR protocol, and a related protocol applied to a future communications system. This is not limited in this application.

Radio frequency identification (RFID) is a contactless automatic identification technology in which related data of an object is obtained in a radio frequency manner and the object is identified. Through RFID, an object in high-speed motion can be identified, a plurality of targets can be identified at the same time, remote reading can be implemented, and working in various harsh environments can be implemented. Therefore, RFID is considered as one of the top ten important information technologies in the 21^{st} century.

In the Internet of Things, people can communicate with each other and objects can communicate with each other. The essence is to use the RFID technology. An RFID system acts like sensory organs of the Internet of Things, making it possible to automatically identify every object in the Internet of Things, and serves as the foundation for building the Internet of Things.

A basic RFID system includes an electronic tag, a reader/writer, and a data management system. The electronic tag is a data carrier of the RFID system, and mainly includes a chip and an antenna. The electronic tag is usually attached to a target object to identify the target object. Each electronic tag has a unique electronic code, and stores related information of an identified object. The reader/writer reads information about the electronic tag by using the radio frequency identification technology, and the reader/writer usually includes a radio frequency unit, a control unit, and an antenna. The data management system manages the reader/writer, generally transmits a command to the reader/writer through an interface, reads or rewrites data information in the electronic tag by using the reader/writer, and updates database information.

RFID is a simple, practical, and highly flexible application technology particularly suitable for automated control. Unique advantages of RFID are unmatched by other identification technologies. RFID can support not only a read-only mode, but also a read-write working mode without contact or aiming, can operate freely in various harsh environments, and can enable a high level of data integration. In addition, because the technology is difficult to be imitated and invaded, the RFID technology also has an extremely high security protection capability.

An electronic product code (Electronic Product Code, EPC) is a new technology developed to improve a logistics supply chain management level and reduce costs, and can implement unique valid identification for all entity objects (for example, retail commodities, logistics units, containers, and freight packages). An EPC system uses the EPC as an identification code of each entity object, leverages advantages of the RFID technology and foundational resource advantages of the Internet, and builds a global "Internet of Things".

An information coding mode of the EPC is compatible with a conventional barcode, but has a significantly enhanced information capacity, which can overcome the disadvantage of the barcode technology being incapable of identifying in a single-product level. In addition, because the EPC system uses the RFID technology that is more advanced than the barcode technology, fast identification at a relatively long distance can be implemented, and an environment adaptation capability of an RFID tag is enhanced, and therefore, the EPC system is hailed as a new technology with a revolutionary significance. The EPC system will bring revolutionary impacts to supply chain management, logistics, production control, retail, and other fields. Globally, the EPC system will fundamentally improve a level of monitoring and management of a flow of goods in processes such as production, transportation, warehousing, and sales. The EPC system will significantly enhance an ability to regulate and control the implementation of production and sales plans, thereby increasing corporate competitiveness.

Both the RFID technology and the barcode identification technology are automatic identification technologies. Compared with the barcode identification technology, the RFID technology has advantages that the barcode identification technology does not have. The RFID technology has the following features:
1. Being contactless, requiring no manual intervention to complete identification tasks, being capable of passing through external materials to read data, and having a long service life and an ability to operate in harsh environments.
2. Being easily embedded in or attached to products of different shapes or types, having a longer reading distance and an ability to write and store data, and requiring less time for writing compared to printing barcodes.
3. Being able to dynamically change content of a tag, and a reader/writer being able to process a plurality of tags simultaneously, having password protection for tag data access, thereby offering higher security.
4. Having an identification speed up to tens of microseconds in some scenarios, having an ability of multi-target identification and motion identification, to track and locate an object attached with an RFID tag.
5. Having an ability of increasing data information reading range of RFID to varying degrees based on power of the reader/writer and an antenna, allowing data reading within ten meters, and thus having an advantage in terms of an identification range over a conventional identification technology.
6. Having strong environmental adaptability, a strong anti-interference capability, high-temperature resistance, waterproofing, oil resistance, and resistance to chemical acid and alkali corrosion.

In summary, the RFID technology has become a predominant automatic identification technology in the Internet of Things due to advantages such as barrier-free reading and long-distance penetration, rapid scanning, a high storage capacity, a pollution resistance capability, reusability, and strong security and confidentiality.

As a quantity of applications in the 5G industry increases, there are increasingly more types of connected things and application scenarios, and higher requirements are also imposed on costs and power consumption of a communications terminal. Application of a battery-free and low-cost passive Internet of Things device becomes a key technology of a cellular Internet of Things, thereby enriching types and a quantity of 5G network-linked terminals, and truly implementing the Internet of Everything. The passive Internet of Things device may be based on the RFID technology and extends on this basis, so as to be applicable to the cellular Internet of Things. Therefore, how to manage the Internet of Things device, for example, information exposure, is a problem that needs to be urgently solved.

To facilitate understanding of the technical solutions in embodiments of this application, the following describes the technical solutions in this application in detail by using specific embodiments. The following related technologies, as optional solutions, may be randomly combined with the technical solutions in embodiments of this application, all of which fall within the protection scope of embodiments of this application. Embodiments of this application include at least part of the following content.

FIG. 2 is a schematic flowchart of a wireless communication method 200 according to an embodiment of this application. As shown in FIG. 2, the method 200 includes the following content:
S210: An application function AF entity transmits first information, where the first information is used to request to obtain information about a target Internet of Things IoT device.
S220: The AF entity receives second information, where the second information includes the information about the target IoT device that the AF entity requests to obtain.

Optionally, the target IoT device may include one or more IoT devices.

In some embodiments, the target IoT device may be a device based on ambient energy, such as an ambient power enabled IoT (Ambient Power Enabled IoT, AMP IoT) device.

In some embodiments, the target IoT device may be a device based on energy harvesting, such as a zero-power device. The target IoT device may have no battery, or may have a limited energy storage capability, for example, store energy by using a capacitor.

In some embodiments, the target IoT device is a type of maintenance-free device with low complexity, a small size, and a long life cycle.

It should be noted that in this embodiment of this application, only the term IoT device is used as a name for such a device. In other embodiments, another name may be used, provided that the device has the foregoing listed features of the IoT device. This is not limited in this application.

In some embodiments, the AF entity may be an application-related functional entity. For example, the AF entity may be an application server. Therefore, the first information may be considered as a request from a third party.

In some embodiments, the AF entity may be a trusted network element, and in this case, the AF entity may interact with another network element in a system. Alternatively, in other embodiments, the AF entity may be a non-trusted network element, and in this case, the AF entity needs to interact with another network element through a first network node (or referred to as a first network element), where the first network node is used for exposure of network information.

Optionally, the first network node may be an NEF entity.

It should be understood that, in this embodiment of this application, the first information is used to carry the information about the target IoT device that is requested to be obtained, for example, the information of which IoT device is being requested, what information of the IoT device is being requested, the information about the IoT device in which time period is being requested, or the information about the IoT device in which region is being requested. This is not limited in this application.

In some embodiments, the first information includes but is not limited to at least one of the following information:
identity information of the target IoT device;
at least one information type, where the at least one information type is a type of the information about the target IoT device that is requested to be obtained; or
time validity information corresponding to the at least one information type.

In some embodiments, the identity information of the target IoT device may not only be used by a network element in a 3GPP system to identify the target IoT device, but may also be used by an application layer (for example, the AF entity) to identify the target IoT device.

In some other embodiments, the identity information of the target IoT device may be first identity information of the target IoT device, the first identity information is used by an application layer (for example, the AF entity) to identify the target IoT device, and the first identity information is denoted as an external identity.

Optionally, the first identity information may be an EPC.

In still other embodiments, the identity information of the target IoT device is second identity information of the target IoT device, the second identity information is used by the network element in the 3GPP system to identify the target IoT device, and the second identity information is denoted as an internal identity or an IoT identity.

In some embodiments, there is a mapping relationship between first identity information of the IoT device and second identity information of the IoT device. In other words, there may be a correspondence between identity information used for the 3GPP system and identity information (for example, the EPC) used by the application layer. In this way, the network element in the 3GPP system may convert between an internal identity and an external identity of the IoT device based on the mapping relationship, which is conducive to regular update of the internal identity of the IoT device, thereby achieving a security and privacy protection effect.

It should be understood that the mapping relationship between the first identity information of the IoT device and the second identity information of the IoT device may be a one-to-one mapping relationship, a one-to-many mapping relationship, or a many-to-one mapping relationship. This is not limited in this application.

By way of example rather than limitation, an IoT identity (that is, the internal identity) of the IoT device and the external identity of the IoT device may have a mapping relationship shown in Table 1.

**Table 1**

| | |
|---|---|
| IoT identity 1 | External identity a |
| IoT identity 2, IoT identity 3, IoT identity 4 | External identity b |
| IoT identity 5 | External identity c, external identity d, external identity e |

In some embodiments, the AF entity may perform mapping (or conversion) between the first identity information of the target IoT device and the second identity information of the target IoT device, for example, map the internal identity of the target IoT device to the external identity of the target IoT device, or map the external identity of the target IoT device to the internal identity of the target IoT device.

In some embodiments, the method 200 further includes:
mapping, by the AF entity, first identity information of the target IoT device to second identity information of the target IoT device based on a first mapping relationship, where the first mapping relationship is a mapping relationship between first identity information and second identity information of IoT devices.

For example, if the AF entity can learn the mapping relationship between first identity information of an IoT device and second identity information of the IoT device, the AF entity may convert and map an external identity of the IoT device into an internal identity of the IoT device based on the first mapping relationship, and further request information about the IoT device by using the internal identity of the IoT device.

In some embodiments, the network element (for example, an NEF entity or an NRF entity) in the 3GPP system can learn the mapping relationship between first identity information of an IoT device and second identity information of the IoT device. In this case, if the AF entity uses the external identity of the IoT device to request the information about the IoT device, the external identity of the IoT device may be mapped to the internal identity based on the mapping relationship between the external identity and the internal identity.

In some embodiments, the IoT device may have a sensor, and the at least one information type may be data collected by the sensor on the IoT device, such as temperature information, location information, or speed information. This is not limited in this application.

In some embodiments, the at least one information type may include one or more of a plurality of preset information types.

In some embodiments, the time validity information corresponding to the at least one information type is used to indicate a time period of information of the at least one information type that is requested by the AF entity.

Optionally, each information type corresponds to respective time validity information, or all information types correspond to same time validity information.

In some embodiments, the time validity information corresponding to the at least one information type includes target time period information corresponding to the at least one information type, and information of the at least one information type in a time period indicated by the target time period information is requested by the AF entity.

Optionally, the target time period information may be used to indicate a past period of time, a current period of time, or a future period of time.

In some embodiments, context information of the IoT device is stored in an IoT functional entity (IoTF entity for short).

It should be understood that the IoT functional entity may be a logical node. For example, the IoTF entity may be provided in combination with an existing network element or coexist with an existing network element. For example, a function of the IoTF entity is added to the existing network element, or the IoTF entity may exist separately as an entity network element. A form of existence of the IoTF entity is not limited in this application.

In some embodiments, the IoT functional entity stores context information of one or more IoT devices.

In other words, the IoT functional entity may create and maintain the context information at a granularity of the IoT device.

In some embodiments, context information of each IoT device may be reported to the IoT functional entity by a communications node communicating with the IoT device.

Optionally, the context information of each IoT device may be granularized at a communications node level.

For example, the context information of each IoT device includes information about communication between at least one communications node and the IoT device.

In some embodiments, the communications node may include a terminal device and/or an access network device, such as a base station.

Optionally, the information about the communication between the at least one communications node and the IoT device includes at least one of the following:
time information of the communication between the at least one communications node and the IoT device; or
information content of the communication between the at least one communications node and the IoT device, for example, location information, temperature information, or speed information obtained by the communications node from the IoT device.

Optionally, the context information of each IoT device may further include information about a life cycle in which the IoT functional entity serves the respective IoT device, in other words, information about a time period in which the context information of the respective IoT device is maintained on the IoT functional entity.

For example, the information about the life cycle in which the IoT functional entity serves the IoT device may indicate a time period. In this time period, a third party is allowed to request to obtain the context information of the IoT device. After the time period, the IoT functional entity no longer serves the IoT device, and therefore, the IoT functional entity no longer stores the context information of the IoT device.

Optionally, the information about the life cycle in which the IoT functional entity serves the IoT device may include:
start time and/or end time of a service provided by the IoT functional entity for the IoT device, or
start time and/or duration of a service provided by the IoT functional entity for the IoT device.

By way of example rather than limitation, a storage format of the context information of the IoT device on the IoT functional entity is as follows:
the identity information of the IoT device (for example, an internal identity and/or an external identity)
i) Communications node 1 (that is, information reported by the communications node 1)
   Information 1: Location information and a timestamp.
   Information 2: Temperature information and a second time period.
   Information 3: Speed information and a third time period.
   ...
ii) Communications node 2 (that is, information reported by the communications node 2) ...
iii) Communications node 3 (that is, information reported by the communications node 3) ...
Life cycle management information, such as start time and end time of the service provided by the IoT functional entity for the IoT device.

In some embodiments, context information of all IoT devices is maintained and managed by one IoT functional entity.

In other words, one IoT functional entity serves all the IoT devices.

In some other embodiments, context information of all IoT devices is maintained and managed by a plurality of IoT functional entities.

For example, each IoT functional entity serves a group of IoT devices.

In this case, a specific IoT functional entity that maintains and manages context information of the target IoT device that is requested by the AF entity needs to be determined, and then the information about the target IoT device is obtained from the IoT functional entity.

In some embodiments, the method 200 further includes:
determining, by the AF entity, a target IoT functional entity based on the identity information of the target IoT device, where the information about the target IoT device is obtained from the target IoT functional entity.

For example, the AF entity can learn respective IoT devices served by each of a plurality of IoT functional entities. Further, the AF entity may determine the target IoT functional entity by using the identity information of the target IoT device, where the target IoT functional entity is an IoT functional entity that serves the target IoT device.

In some embodiments of this application, S210 includes:
transmitting, by the AF entity, the first information to a first network node, where the first network node is used for exposure of network information.

Optionally, the first network node is an NEF entity.

For example, in a case that the AF entity is a non-trusted network element, the AF entity requests the information about the IoT device through the NEF entity.

Further, the first network node may forward the request from the AF entity to the target IoT functional entity, and obtain the requested information about the IoT device from the target IoT functional entity. For example, when receiving the request from the first network node, the target IoT functional entity transmits, to the first network node, the information about the IoT device that is requested by the AF entity.

In some embodiments, S220 includes:
receiving, by the AF entity, the second information transmitted by the first network node, where the second information is obtained by the first network node from a target IoT functional entity.

In some other embodiments of this application, that the application function AF entity transmits the first information includes:
transmitting, by the AF entity, the first information to a target IoT functional entity.

For example, in a case that the AF entity is a trusted network element, the AF entity may directly request the information about the IoT device from the target IoT functional entity. Further, the AF entity receives the second information transmitted by the target IoT functional entity.

Optionally, the second information may include at least one of the following:
the identity information of the target IoT device, or requested information corresponding to the at least one information type.

In summary, in this embodiment of this application, an AF entity may request to obtain information about a target IoT device. For example, the AF entity may request the information about the target IoT device from an IoT functional entity through an NEF entity, or may directly request the information about the target IoT device from an IoT functional entity. Therefore, in this embodiment of this application, the information about the target IoT device may be obtained by using an information exposure service provided by a 3GPP core network, and the obtained information about the target IoT device is exposed to the AF entity for use as required, so that on-demand management of the target IoT device can be implemented.

FIG. 3 is a schematic flowchart of a wireless communication method 300 according to an embodiment of this application. As shown in FIG. 3, the method 300 includes the following content:
S310: An Internet of Things IoT functional entity receives first information, where the first information is used by an application function AF entity to request to obtain information about a target Internet of Things IoT device.
S320: The IoT functional entity transmits second information, where the second information includes the information about the target IoT device that the AF entity requests to obtain.

In some embodiments, the first information includes at least one of the following:
identity information of the target IoT device;
at least one information type, where the at least one information type is a type of the information about the target IoT device that is requested to be obtained; or
time validity information corresponding to the at least one information type.

In some embodiments, the time validity information corresponding to the at least one information type includes target time period information corresponding to the at least one information type, and information of the at least one information type in a time period indicated by the target time period information is requested by the AF entity.

It should be understood that for a specific meaning of information content included in the first information, reference is made to related descriptions in the method 200. For brevity, details are not described herein again.

In some embodiments, the identity information of the target IoT device is first identity information of the target IoT device, and the first identity information is used by the AF entity to identify the target IoT device.

In some other embodiments, the identity information of the target IoT device is second identity information of the target IoT device, and the second identity information is used by a network node to identify the target IoT device.

In some embodiments, the IoT functional entity may correspond to the target IoT functional entity in the method 200. In other words, the IoT functional entity (IoTF entity for short) is configured to maintain and manage context information of the IoT device.

For content and a storage format of the context information of the IoT device, reference is made to related descriptions in the method 200. For brevity, details are not described herein again.

For example, the IoT functional entity stores context information of one or more IoT devices, and context information of each IoT device includes information about communication between at least one communications node and the IoT device and/or information about a life cycle in which the IoT functional entity serves the IoT device.

Optionally, the information about the communication between the at least one communications node and the IoT device includes at least one of the following:
time information of the communication between the at least one communications node and the IoT device; or
information content of the communication between the at least one communications node and the IoT device.

In some embodiments of this application, S310 includes:
receiving, by the IoT functional entity, the first information transmitted by a first network node, where the first network node is used for exposure of network information. Optionally, the first network node is a network exposure function NEF entity.

Optionally, in a case that the AF entity is a non-trusted network element, the first network node may request the information about the target IoT device from the IoT functional entity based on the request from the AF entity.

Optionally, the first network node may first receive first information from the AF entity, where the first information is used to indicate the requested information about the target IoT device. Further, the first network device transmits the first information to the IoT functional entity based on the request from the AF entity, to request the information about the target IoT device.

It should be understood that content of the first information transmitted by the AF entity may be the same as or may be different from content of the first information transmitted by the first network node. For example, different identity information of the target IoT device may be carried. For example, identity information of the target IoT device that is carried in the first information transmitted by the AF entity may be an internal identity of the target IoT device, and identity information of the target IoT device that is carried in the first information transmitted by the first network node may be an external identity of the target IoT device.

In some embodiments, S320 may include:
transmitting, by the IoT functional entity, the second information to the first network node.

Optionally, in a case that the AF entity is a non-trusted network element, the first network node may request the information about the target IoT device from the IoT functional entity based on the request from the AF entity. Further, the IoT functional entity may feedback, to the first network node, the information about the target IoT device that is requested by the AF entity.

In some other embodiments of this application, S310 may include:
receiving, by the IoT functional entity, the first information transmitted by the AF entity.

For example, in a case that the AF entity is a trusted network element, the IoT functional entity may directly request the information about the target IoT device from the IoT functional entity.

In some embodiments, S320 may include:
transmitting, by the IoT functional entity, the second information to the AF entity.

For example, in a case that the AF entity is a trusted network element, the IoT functional entity may directly request the information about the target IoT device from the IoT functional entity. Further, the IoT functional entity may feedback the requested information about the target IoT device to the AF entity.

In some embodiments, the IoT functional entity may perform mapping (or conversion) between the first identity information of the target IoT device and the second identity information of the target IoT device, for example, map an internal identity of the target IoT device to an external identity of the target IoT device, or map an external identity of the target IoT device to an internal identity of the target IoT device.

In some embodiments, the method 300 further includes:
mapping, by the IoT functional entity, first identity information of the target IoT device to second identity information of the target IoT device based on a first mapping relationship, where the first mapping relationship is a mapping relationship between first identity information and second identity information of IoT devices.

In some embodiments, the IoT functional entity can learn the mapping relationship between first identity information of an IoT device and second identity information of the IoT device.

For example, the identity information of the target IoT device that is carried in the first information transmitted by the first network node or the AF entity to the IoT functional entity is an internal identity, and context information of the IoT device that is stored in the IoT functional entity is represented by an external identity of the IoT device. In this case, the IoT functional entity may map the internal identity of the target IoT device to the external identity of the target IoT device, and further query context information of the target IoT device.

For another example, the identity information of the target IoT device that is carried in the first information transmitted by the first network node or the AF entity to the IoT functional entity is an external identity, and context information of the IoT device that is stored in the IoT functional entity is represented by an internal identity of the IoT device. In this case, the IoT functional entity may map the external identity of the target IoT device to the internal identity of the target IoT device, and further query context information of the target IoT device.

In some embodiments, the method 300 further includes:
determining, by the IoT functional entity, the second information based on the time validity information in the first information and context information of the target IoT device that is stored in the IoT functional entity.

For example, if a time period indicated by the time validity information is a historical time period, or a time period corresponding to the context information of the target IoT device includes a time period indicated by the time validity information, the IoT functional entity obtains, from the stored context information of the target IoT device, information that is of at least one information type requested by the AF entity.

For example, if a type of the information that the AF entity requests to obtain is location information, time validity information corresponding to the location information is a first time period, and if a timestamp corresponding to the location information stored in the context information of the target IoT device is included within the first time period, it may be determined that the second information includes the location information.

For example, if a type of the information that the AF entity requests to obtain is temperature information, time validity information corresponding to the location information is a second time period, and if a timestamp corresponding to the temperature information stored in the context information of the target IoT device is after the second time period, it may be determined that the second information does not include the temperature information.

In some embodiments, when a time period indicated by the time validity information is a third time period, and the third time period is a current time period, that is, the AF entity requests to obtain information about the target IoT device in the third time period, the IoT functional entity may trigger a procedure of obtaining the information about the target IoT device in the third time period.

For example, the IoT functional entity may determine, based on the context information of the target IoT device that is stored in the IoT functional entity, a communications node that recently reports the information about the target IoT device to the IoT functional entity, which is denoted as a target communications node, and further obtain the information about the target IoT device in the time period corresponding to the time validity information from the target communications node.

Optionally, the target communications node may be a node that communicates with the target IoT device recently, for example, a node that communicates with the target IoT device most recently, or a node that communicates with the target IoT device in most recent n times, where n is a positive integer.

Optionally, the target communications node may be a terminal device or an access network device, such as a base station.

For example, the IoT functional entity may transmit third information to the target communications node, where the third information is used to indicate the identity information of the target IoT device, information about the third time period, and the type of the information requested to be obtained. Further, the target communications node may transmit, to the IoT functional entity, the information about the target IoT device requested to be obtained.

In some embodiments, when the time period indicated by the time validity information is a future time period, the AF entity may obtain, after the time period, the information about the target IoT device in the time period. For example, the information about the target IoT device in the time period is obtained from a communications node that communicates with the target IoT device.

In summary, in this embodiment of this application, an IoT functional entity may feedback information about a target IoT device based on a request from a third party (that is, a request from an AF entity). For example, the AF entity may request the information about the target IoT device from the IoT functional entity through an NEF entity, or may directly request the information about the target IoT device from the IoT functional entity. Therefore, in this embodiment of this application, the information about the target IoT device may be obtained by using an information exposure service provided by a 3GPP core network, and the obtained information about the target IoT device is exposed to the AF entity for use as required, so that on-demand management of the target IoT device can be implemented.

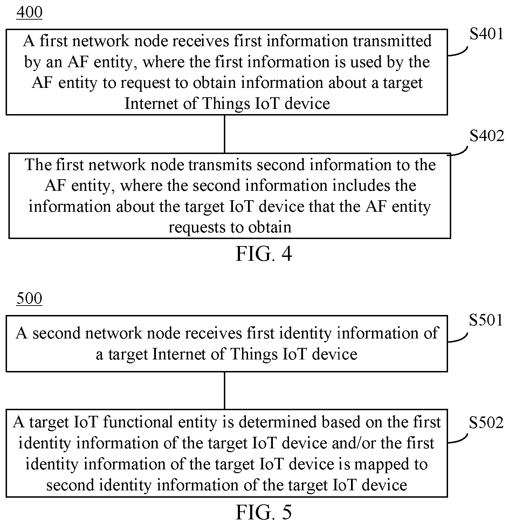

FIG. 4 is a schematic flowchart of a wireless communication method 400 according to an embodiment of this application. As shown in FIG. 4, the method 400 includes the following content:

S410: A first network node receives first information transmitted by an application function AF entity, where the first information is used by the AF entity to request to obtain information about a target Internet of Things IoT device.

S420: The first network node transmits second information to the AF entity, where the second information includes the information about the target IoT device that the AF entity requests to obtain.

In some embodiments, the first network node may be an NEF entity.

It should be understood that the second information transmitted by the IoT functional entity to the first network node may be the same as or may be different from the second information transmitted by the first network node to the AF entity. For example, different identity information of the target IoT device may be carried. For example, identity information of the target IoT device that is carried in the second information transmitted by the IoT functional entity may be an internal identity of the target IoT device, and identity information of the target IoT device that is carried in the second information transmitted by the first network node may be an external identity of the target IoT device.

In some embodiments, the first information includes at least one of the following:
identity information of the target IoT device;
at least one information type, where the at least one information type is a type of the information about the target IoT device that is requested to be obtained; or
time validity information corresponding to the at least one information type.

In some embodiments, the time validity information corresponding to the at least one information type includes target time period information corresponding to the at least one information type, and information of the at least one information type in a time period indicated by the target time period information is requested by the AF entity.

In some embodiments, the identity information of the target IoT device is first identity information of the target IoT device, and the first identity information is used by the AF entity to identify the target IoT device.

In some other embodiments, the identity information of the target IoT device is second identity information of the target IoT device, and the second identity information is used by a network node to identify the target IoT device.

It should be understood that for a specific meaning of information content included in the first information, refer to related descriptions in the method 200. For brevity, details are not described herein again.

In some embodiments, the method 400 further includes:
transmitting, by the first network node, the first information to a target IoT functional entity.

In some embodiments, the method 400 further includes:
receiving, by the first network node, the second information transmitted by a target IoT functional entity.

For example, in a case that the AF entity is a non-trusted network element, the AF entity may request the information about the target IoT device from the IoT functional entity through the first network node. Further, the IoT functional entity may feedback the requested information about the target IoT device to the first network node.

In some embodiments, the first network node may perform mapping (or conversion) between the first identity information of the target IoT device and the second identity information of the target IoT device, for example, map an internal identity of the target IoT device to an external identity of the target IoT device, or map an external identity of the target IoT device to an internal identity of the target IoT device.

In some embodiments, the method 400 further includes:
mapping, by the first network node, first identity information of the target IoT device to second identity information of the target IoT device based on a first mapping relationship, where the first mapping relationship is a mapping relationship between first identity information and second identity information of IoT devices.

For example, identity information of the target IoT device that is carried in the first information transmitted by the AF entity to the first network node is an internal identity. The first network node may map the internal identity of the target IoT device to an external identity of the target IoT device, and further, use the external identity of the target IoT device when requesting to obtain the information about the target IoT device from the IoT functional entity.

Optionally, in a case that the identity information of the IoT device dynamically changes, the first network node performs mapping between the first identity information of the target IoT device and the second identity information of the target IoT device.

In some embodiments, a second network node may perform mapping (or conversion) between the first identity information of the target IoT device and the second identity information of the target IoT device, for example, map the internal identity of the target IoT device to the external identity of the target IoT device, or map the external identity of the target IoT device to the internal identity of the target IoT device.

Optionally, the second network node is used for storage of network information. For example, the second network node is a network repository function (Network Repository Function, NRF) entity.

For example, the first network node transmits the first identity information of the target IoT device to the second network node. Further, the second network device may query the second identity information of the target IoT device based on the first identity information of the target IoT device.

Optionally, in a case that the identity information of the IoT device does not change frequently, the first network node performs mapping between the first identity information of the target IoT device and the second identity information of the target IoT device.

In some embodiments, the method 400 further includes:
determining, by the first network node, a target IoT functional entity based on the identity information of the target IoT device, where the information about the target IoT device is obtained from the target IoT functional entity.

For example, when context information of a plurality of IoT devices is maintained and managed by a plurality of IoT functional entities, the first network node determines the target IoT functional entity based on the identity information of the target IoT device, where the target IoT functional entity is an IoT functional entity that serves the target IoT device.

In some embodiments, the method 400 further includes:
transmitting, by the first network node, the identity information of the target IoT device to a second network node, where the identity information of the target IoT device is used to determine a target IoT functional entity corresponding to the target IoT device.

For example, when context information of a plurality of IoT devices is maintained and managed by a plurality of IoT functional entities, the first network node may transmit the identity information of the target IoT device to the second network node, and further, the second network node determines the target IoT functional entity based on the identity information of the target IoT device, where the target IoT functional entity is an IoT functional entity that serves the target IoT device.

FIG. 5 is a schematic flowchart of a wireless communication method 500 according to an embodiment of this application. As shown in FIG. 5, the method 500 includes the following content:
S510: A second network node receives first identity information of a target Internet of Things IoT device.
S520: A target IoT functional entity is determined based on the first identity information of the target IoT device, and/or the first identity information of the target IoT device is mapped to second identity information of the target IoT device, where the first identity information is used by an application function AF entity to identify the target IoT device, and the second identity information is used by a network node to identify the target IoT device.

For example, when context information of a plurality of IoT devices is maintained and managed by a plurality of IoT functional entities, the second network node determines the target IoT functional entity based on the identity information of the target IoT device, where the target IoT functional entity is an IoT functional entity that serves the target IoT device.

In some embodiments, the mapping the first identity information of the target IoT device to the second identity information of the target IoT device includes:
mapping, by the second network node, the first identity information of the target IoT device to the second identity information of the target IoT device based on a first mapping relationship, where the first mapping relationship is a mapping relationship between first identity information and second identity information of IoT devices.

In some embodiments, the second network node is a network repository function NRF entity.

In some embodiments, the first identity information of the target IoT device is received from the AF entity, or is received from a first network node.

In some embodiments, the first network node is a network exposure function NEF entity.

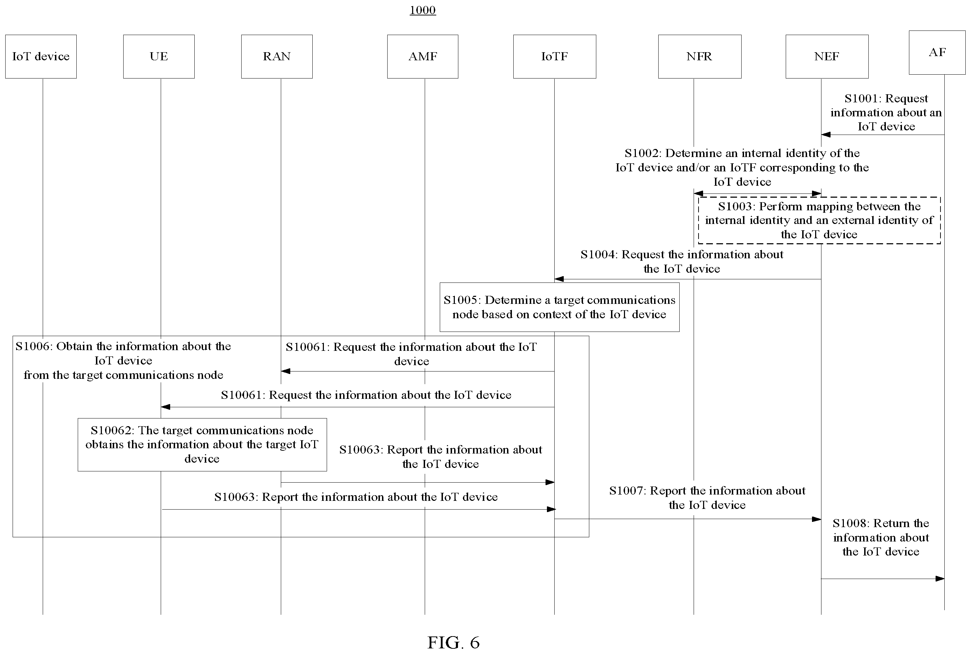

With reference to FIG. 2 to FIG. 5, the foregoing describes in detail a wireless communication method according to an embodiment of this application from perspectives of an AF entity, a first network node, a IoT functional entity, and a second network node. With reference to FIG. 6, the following describes in detail a wireless communication method according to another embodiment of this application from the perspective of device interaction. In an embodiment of FIG. 6, a first network node is an NEF entity, and a second network node is an NRF entity.

FIG. 6 is a schematic interaction diagram of a wireless communication method 1000 according to an embodiment of this application. As shown in FIG. 6, the method 1000 includes a part or all of the following content.

S1001: An AF entity requests information about a target IoT device from an NEF entity.

For example, the AF entity transmits first information to the NEF entity, where the first information includes at least one of the following:
identity information of the target IoT device;
at least one information type, where the at least one information type is a type of the information about the target IoT device that is requested to be obtained, for example, location information, speed information, or temperature information; or
time validity information corresponding to the at least one information type, for example, information about a time period.

In some embodiments, the at least one information type may include one or more of a plurality of preset information types.

For example, the at least one information type may include location information, temperature information, speed information, or the like of the target IoT device.

In some embodiments, time validity information corresponding to the at least one information type may indicate a historical time period, a current time period, and a future time period.

Optionally, if the time validity information indicates the current time period, the IoT functional entity may trigger step S1006 to obtain the information about the target IoT device in the current time period.

Optionally, if the time validity information indicates the future time period, the IoT functional entity may obtain the requested information about the target IoT device in the future time period.

Optionally, the identity information of the target IoT device that is included in the first information may be an internal identity of the target IoT device, or may be an external identity of the target IoT device.

Optionally, the AF entity may map the external identity of the target IoT device to the internal identity based on a first mapping relationship, and further use the internal identity of the target IoT device when requesting the information about the target IoT device.

In some embodiments, a plurality of IoT functional entities are deployed in a system, and each IoT functional entity is configured to maintain and manage context information of a group of IoT devices. In this case, a specific IoT functional entity from which the information about the target IoT device is obtained needs to be determined.

Optionally, in some embodiments, the method 1000 may further include the following step:
S1002: At least one of an internal identity of the target IoT device or a target IoT functional entity corresponding to the target IoT device is determined.

For example, the NEF entity may transmit the external identity of the target IoT device to the NRF entity, and further, the NRF entity determines, based on the external identity of the target IoT device, the internal identity of the target IoT device and/or the target IoT functional entity corresponding to the target IoT device.

As an example, the NRF entity may determine the internal identity of the target IoT device based on the first mapping relationship and the external identity of the target IoT device.

Further, the NRF entity may transmit the determined internal identity of the target IoT device and/or the determined target IoT functional entity corresponding to the target IoT device to the NEF entity.

For another example, the NEF entity may also determine the internal identity of the target IoT device and/or the target IoT functional entity corresponding to the target IoT device based on the external identity of the target IoT device.

Optionally, in a case that the identity information of the IoT device does not change frequently, the first mapping relationship may be stored in the NRF entity, and further, the NRF entity performs mapping for the identities of the target IoT device.

Optionally, in a case that the identity information of the IoT device dynamically changes, the first mapping relationship may be stored in the NEF entity, and further, the NEF entity performs mapping for the identities of the target IoT device.

Optionally, in some embodiments, the method 1000 may further include the following steps:

S1003: The NEF entity establishes a mapping relationship between the internal identity and the external identity of the target IoT device.

For example, when the first mapping relationship is stored in the NRF entity, the NEF entity may establish the mapping relationship between the internal identity and the external identity of the target IoT device based on the internal identity of the target IoT device that is fed back by the NRF entity.

S1004: The NEF entity requests the information about the target IoT device from the IoT functional entity.

Optionally, the IoT functional entity may be a functional entity that serves the target IoT device.

For example, the NEF entity may transmit the first information to the IoT functional entity.

Optionally, the identity information of the target IoT device that is carried in the first information may be the external identity of the target IoT device, or may be the internal identity.

S1005: The IoT functional entity determines, based on the time validity information in the first information, whether context information of the target IoT device that is stored in the IoT functional entity includes information within a requested time period (denoted as a valid time period), and if yes, performs S1007 to transmit the requested information to the NEF entity. Otherwise, a target communications node is determined based on the context information of the target IoT device, and step S1006 is triggered to obtain the information about the target IoT device in the valid time period from the target communications node. The target communications node may be a node that communicates with the target IoT device recently, for example, a node that communicates with the target IoT device most recently, or a node that communicates with the target IoT device in most recent n times, where n is a positive integer.

Optionally, the target communications node may be UE or an access network device.

Optionally, S1006 may include the following steps:
S10061: The IoT functional entity requests information about the target IoT device in the valid time period from the target communications node.
S10062: The target communications node obtains the information about the target IoT device in the valid time period from the target IoT device.

For example, the target communications node may search for and locate the target IoT device, and further exchange information with the target IoT device to obtain the information about the target IoT device in the valid time period.

S10063: The target communications node feeds back the obtained information about the target IoT device in the valid time period to the IoT functional entity.

S1007: The IoT functional entity reports the information about the target IoT device to the NEF entity.

S1008: The NEF entity returns the information about the target IoT device to the AF entity.

Optionally, in a case that the AF entity is a non-trusted network element, the AF may obtain the information about the target IoT device through the foregoing steps.

Optionally, in a case that the AF entity is a trusted network element, the foregoing steps may alternatively not require participation of the NEF entity.

For example, the AF entity may directly request the information about the target IoT device from the IoT functional entity.

Further, the IoT functional entity may return the information about the target IoT device to the AF entity. For specific implementation of obtaining the information about the target IoT device by the IoT functional entity, reference is made to step S1005 and step S1006. For brevity, details are not described herein again.

In summary, in this embodiment of this application, an AF entity may request to obtain information about a target IoT device. For example, the AF entity may request the information about the target IoT device from an IoT functional entity through an NEF entity, or may directly request the information about the target IoT device from an IoT functional entity. Therefore, in this embodiment of this application, the information about the target IoT device may be obtained by using an information exposure service provided by a 3GPP core network, and the obtained information about the target IoT device is exposed to the AF entity for use as required, so that on-demand management of the target IoT device can be implemented.

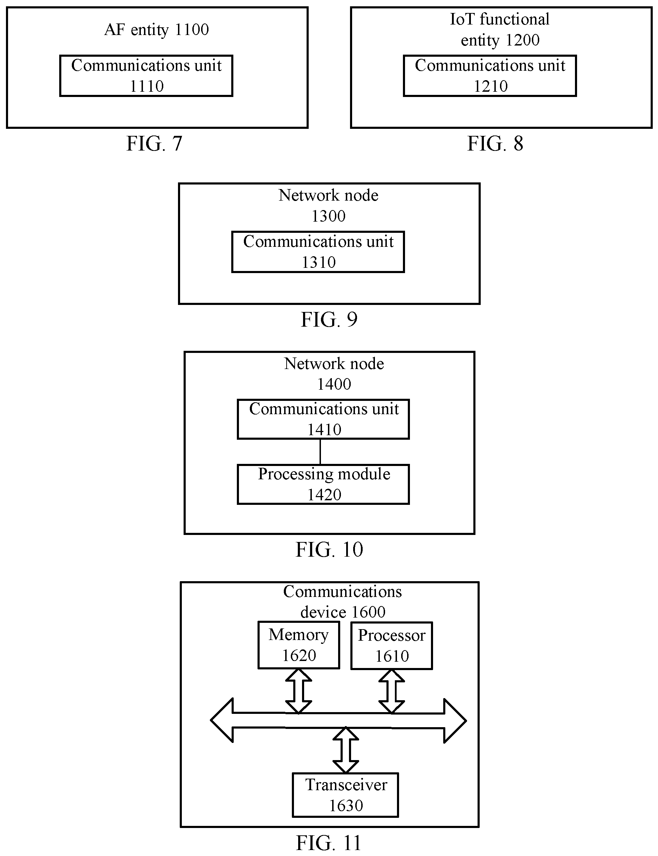

The foregoing describes method embodiments of this application in detail with reference to FIG. 2 to FIG. 6. The following describes apparatus embodiments of this application in detail with reference to FIG. 7 to FIG. 7. It should be understood that the apparatus embodiments correspond to the method embodiments. For similar descriptions, reference is made to the method embodiments.

FIG. 7 is a schematic block diagram of an AF entity 1100 according to an embodiment of this application. As shown in FIG. 7, the AF entity 1100 includes:
a communications unit 1110, configured to: transmit first information, where the first information is used to request to obtain information about a target Internet of Things IoT device; and receive second information, where the second information includes the information about the target IoT device that the AF entity requests to obtain.

In some embodiments, the first information includes at least one of the following:
identity information of the target IoT device;
at least one information type, where the at least one information type is a type of the information about the target IoT device that the AF entity requests to obtain; or
time validity information corresponding to the at least one information type.

In some embodiments, the time validity information corresponding to the at least one information type includes target time period information corresponding to the at least one information type, and information of the at least one information type in a time period indicated by the target time period information is requested by the AF entity.

In some embodiments, the identity information of the target IoT device is first identity information of the target IoT device, and the first identity information is used by the AF entity to identify the target IoT device; or
the identity information of the target IoT device is second identity information of the target IoT device, and the second identity information is used by a network node to identify the target IoT device.

In some embodiments, the AF entity 1100 further includes:
a processing unit, configured to map first identity information of the target IoT device to second identity information of the target IoT device based on a first mapping relationship, where the first mapping relationship is a mapping relationship between first identity information and second identity information of IoT devices.

In some embodiments, the AF entity 1100 further includes:
a processing unit, configured to determine a target IoT functional entity based on the identity information of the target IoT device, where the information about the target IoT device is obtained from the target IoT functional entity.

In some embodiments, the communications unit 1110 is further configured to:
transmit the first information to a first network node, where the first network node is used for exposure of network information.

In some embodiments, the first network node is a network exposure function NEF entity.

In some embodiments, the communications unit 1110 is further configured to:
receive the second information transmitted by the first network node, where the second information is obtained by the first network node from a target IoT functional entity.

In some embodiments, the communications unit 1110 is further configured to transmit the first information to a target IoT functional entity.

In some embodiments, the communications unit 1110 is further configured to receive, by the AF entity, the second information transmitted by the target IoT functional entity.

Optionally, in some embodiments, the communications unit may be a communications interface or a transceiver, or an input/output interface of a communications chip or a system-on-chip. The processing unit may be one or more processors.

It should be understood that the AF entity 1100 according to this embodiment of this application may correspond to the AF entity in the method embodiments of this application, and the foregoing and other operations and/or functions of the units in the AF entity 1100 are respectively used to implement corresponding procedures of the AF entity in the methods shown in FIG. 2 to FIG. 6. For brevity, details are not described herein again.

FIG. 8 is a schematic block diagram of an IoT functional entity according to an embodiment of this application. An IoT functional entity 1200 in FIG. 8 includes:
a communications unit 1210, configured to: receive first information, where the first information is used by an application function AF entity to request to obtain information about a target Internet of Things IoT device; and
transmit second information, where the second information includes the information about the target IoT device that the AF entity requests to obtain.

In some embodiments, the first information includes at least one of the following:
identity information of the target IoT device;
at least one information type, where the at least one information type is a type of the information about the target IoT device that the AF entity requests to obtain; or
time validity information corresponding to the at least one information type.

In some embodiments, the time validity information corresponding to the at least one information type includes target time period information corresponding to the at least one information type, and information of the at least one information type in a time period indicated by the target time period information is requested by the AF entity.

In some embodiments, the first network node 1200 further includes:
a processing unit, configured to determine the second information based on the time validity information in the first information and context information of the target IoT device that is stored in the IoT functional entity.

In some embodiments, the first network node 1200 further includes:
a processing unit, configured to: if a time period corresponding to the context information of the target IoT device is different from a time period corresponding to the time validity information, obtain, from a target communications node, information about the target IoT device in the time period corresponding to the time validity information, where the target communications node is a communications node that recently reports information about the target IoT device to the IoT functional entity.

In some embodiments, the IoT functional entity stores context information of one or more IoT devices, and context information of each IoT device includes information about communication between at least one communications node and the IoT device and/or information about a life cycle in which the IoT functional entity serves the IoT device.

In some embodiments, the information about the communication between the at least one communications node and the IoT device includes at least one of the following:
time information of the communication between the at least one communications node and the IoT device; or
information content of the communication between the at least one communications node and the IoT device.

In some embodiments, the identity information of the target IoT device is first identity information of the target IoT device, and the first identity information is used by the AF entity to identify the target IoT device; or
the identity information of the target IoT device is second identity information of the target IoT device, and the second identity information is used by a network node to identify the target IoT device.

In some embodiments, the first network node 1200 further includes:
a processing unit, configured to map first identity information of the target IoT device to second identity information of the target IoT device based on a first mapping relationship, where the first mapping relationship is a mapping relationship between first identity information and second identity information of IoT devices.

In some embodiments, the communications unit 1210 is further configured to:
receive the first information transmitted by a first network node, where the first network node is used for exposure of network information.

In some embodiments, the first network node is a network exposure function NEF entity.

In some embodiments, the communications unit 1210 is further configured to transmit the second information to the first network node.

In some embodiments, the communications unit 1210 is further configured to receive the first information transmitted by the AF entity.

In some embodiments, the communications unit 1210 is further configured to transmit the second information to the AF entity.

Optionally, in some embodiments, the communications unit may be a communications interface or a transceiver, or an input/output interface of a communications chip or a system-on-chip. The processing unit may be one or more processors.

It should be understood that the IoT functional entity 1200 according to this embodiment of this application may correspond to the IoT functional entity or the target IoT functional entity in the method embodiments of this application, and the foregoing and other operations and/or functions of the units in the IoT functional entity are respectively used to implement corresponding procedures of the IoT functional entity in the methods shown in FIG. 2 to FIG. 6. For brevity, details are not described herein again.

FIG. 9 is a schematic block diagram of a network node according to an embodiment of this application. A network node 1300 in FIG. 9 includes:
a communications unit 1310, configured to: receive first information transmitted by an application function AF entity, where the first information is used by the AF entity to request to obtain information about a target Internet of Things IoT device; and
transmit second information to the AF entity, where the second information includes the information about the target IoT device that the AF entity requests to obtain.

In some embodiments, the first information includes at least one of the following:
identity information of the target IoT device;
at least one information type, where the at least one information type is a type of the information about the target IoT device that the AF entity requests to obtain; or
time validity information corresponding to the at least one information type.

In some embodiments, the time validity information corresponding to the at least one information type includes target time period information corresponding to the at least one information type, and information of the at least one information type in a time period indicated by the target time period information is requested by the AF entity.

In some embodiments, the identity information of the target IoT device is first identity information of the target IoT device, and the first identity information is used by the AF entity to identify the target IoT device; or
the identity information of the target IoT device is second identity information of the target IoT device, and the second identity information is used by a network node to identify the target IoT device.

In some embodiments, the network node further includes:
a processing unit, configured to map first identity information of the target IoT device to second identity information of the target IoT device based on a first mapping relationship, where the first mapping relationship is a mapping relationship between first identity information and second identity information of IoT devices.

In some embodiments, the communications unit 1310 is further configured to:
transmit the first identity information of the target IoT device to the second network node, where the first identity information of the target IoT device is used to query the second identity information of the target IoT device, and the second network node is used for storage of network information.

In some embodiments, the network node further includes:
a processing unit, configured to determine a target IoT functional entity based on the identity information of the target IoT device, where the information about the target IoT device is obtained from the target IoT functional entity.

In some embodiments, the communications unit 1310 is further configured to:
transmit the identity information of the target IoT device to the second network node, where the identity information of the target IoT device is used to determine a target IoT functional entity corresponding to the target IoT device, and the second network node is used for storage of network information.

In some embodiments, the communications unit 1310 is further configured to transmit the first information to a target IoT functional entity.

In some embodiments, the communications unit 1310 is further configured to receive the second information transmitted by a target IoT functional entity.

In some embodiments, the second network node is a network repository function NRF entity.

In some embodiments, the network node is a network exposure function NEF entity.

Optionally, in some embodiments, the communications unit may be a communications interface or a transceiver, or an input/output interface of a communications chip or a system-on-chip. The processing unit may be one or more processors.

It should be understood that the network node 1200 according to this embodiment of this application may correspond to the first network node in the method embodiments of this application, and the foregoing and other operations and/or functions of the units in the network node 1200 are respectively used to implement corresponding procedures of the first network node in the methods shown in FIG. 2 to FIG. 6. For brevity, details are not described herein again.

FIG. 10 is a schematic block diagram of a network node according to an embodiment of this application. A network node 1400 in FIG. 10 includes:
a communications unit 1410, configured to receive first identity information of a target Internet of Things IoT device; and
a processing unit 1420, configured to: determine a target IoT functional entity based on the first identity information of the target IoT device, and/or map the first identity information of the target IoT device to second identity information of the target IoT device, where the first identity information is used by an application function AF entity to identify the target IoT device, and the second identity information is used by a network node to identify the target IoT device.

In some embodiments, the processing unit 1420 is further configured to:
map the first identity information of the target IoT device to the second identity information of the target IoT device based on a first mapping relationship, where the first mapping relationship is a mapping relationship between first identity information and second identity information of IoT devices.

In some embodiments, the first identity information of the target IoT device is received from the application function AF entity, or is received from a first network node.

In some embodiments, the network node is a network repository function NRF entity.

In some embodiments, the first network node is a network exposure function NEF entity.

Optionally, in some embodiments, the communications unit may be a communications interface or a transceiver, or an input/output interface of a communications chip or a system-on-chip. The processing unit may be one or more processors.

It should be understood that the network node 1400 according to this embodiment of this application may correspond to the second network node in the method embodiments of this application, and the foregoing and other operations and/or functions of the units in the network node are respectively used to implement corresponding procedures of the second network node in the methods shown in FIG. 2 to FIG. 6. For brevity, details are not described herein again.

FIG. 11 is a schematic structural diagram of a communications device 1600 according to an embodiment of this application. The communications device 1600 shown in FIG. 11 includes a processor 1610, and the processor 1610 may invoke a computer program from a memory and run the computer program to implement a method in embodiments of this application.

Optionally, as shown in FIG. 11, the communications device 1600 may further include a memory 1620. The processor 1610 may invoke a computer program from the memory 1620 and run the computer program to implement a method in embodiments of this application.

The memory 1620 may be a separate component independent of the processor 1610, or may be integrated into the processor 1610.

Optionally, as shown in FIG. 11, the communications device 1600 may further include a transceiver 1630. The processor 1610 may control the transceiver 630 to communicate with another device, and specifically, may transmit information or data to the another device, or receive information or data transmitted by the another device.

The transceiver 1630 may include a transmitter and a receiver. The transceiver 1630 may further include an antenna, and there may be one or more antennas.

Optionally, the communications device 1600 may specifically be the AF entity in embodiments of this application, and the communications device 1600 may implement corresponding procedures implemented by the AF entity in a method in embodiments of this application. For brevity, details are not described herein again.

Optionally, the communications device 1600 may be specifically the first network node in embodiments of this application, and the communications device 1600 may implement corresponding procedures implemented by the first network node in a method in embodiments of this application. For brevity, details are not described herein again.

Optionally, the communications device 1600 may be specifically the IoT functional entity in embodiments of this application, and the communications device 1600 may implement corresponding procedures implemented by the IoT functional entity in a method in embodiments of this application. For brevity, details are not described herein again.

Optionally, the communications device 1600 may be specifically the second network node in embodiments of this application, and the communications device 1600 may implement corresponding procedures implemented by the second network node in a method in embodiments of this application. For brevity, details are not described herein again.

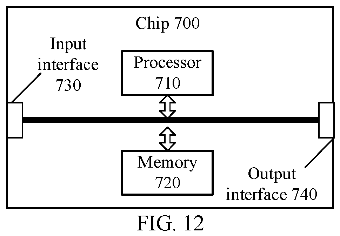

FIG. 12 is a schematic structural diagram of a chip according to an embodiment of this application. A chip 700 shown in FIG. 12 includes a processor 710, and the processor 710 may invoke a computer program from a memory and run the computer program to implement a method in embodiments of this application.

Optionally, as shown in FIG. 12, the chip 700 may further include a memory 720. The processor 710 may invoke a computer program from the memory 720 and run the computer program to implement a method in embodiments of this application.

The memory 720 may be a separate component independent of the processor 710, or may be integrated into the processor 710.

Optionally, the chip 700 may further include an input interface 730. The processor 710 may control the input interface 730 to communicate with another device or chip, and specifically, may obtain information or data transmitted by the another device or chip.

Optionally, the chip 700 may further include an output interface 740. The processor 710 may control the output interface 740 to communicate with another device or chip, and specifically, may output information or data to the another device or chip.

Optionally, the chip may be applied to the first network node in embodiments of this application, and the chip may implement corresponding procedures implemented by the first network node in a method in embodiments of this application. For brevity, details are not described herein again.

Optionally, the chip may be applied to the AF entity in embodiments of this application, and the chip may implement corresponding procedures implemented by the AF entity in a method in embodiments of this application. For brevity, details are not described herein again.

Optionally, the chip may be applied to the second network node in embodiments of this application, and the chip may implement corresponding procedures implemented by the second network node in a method in embodiments of this application. For brevity, details are not described herein again.

Optionally, the chip may be applied to the IoT functional entity in embodiments of this application, and the chip may implement corresponding procedures implemented by the IoT functional entity in a method in embodiments of this application. For brevity, details are not described herein again.

It should be understood that the chip mentioned in this embodiment of this application may alternatively be referred to as a system-level chip, a system chip, a chip system, a system-on-chip, or the like.

It should be understood that, the processor in this embodiment of this application may be an integrated circuit chip having a signal processing capability. In an implementation process, the steps in the foregoing method embodiments may be completed by using an integrated logic circuit of hardware of the processor or instructions in a software form. The processor may be a general-purpose processor, a digital signal processor (Digital Signal Processor, DSP), an application-specific integrated circuit (Application Specific Integrated Circuit, ASIC), a field-programmable gate array (Field Programmable Gate Array, FPGA) or another programmable logic device, a discrete gate or a transistor logic device, or a discrete hardware component. The processor may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly completed by a hardware decoding processor, or may be completed by a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in a memory. The processor reads information from the memory, and completes the steps of the foregoing methods in combination with hardware in the processor.

It may be understood that the memory in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example rather than limitative description, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that, the memory in the systems and methods described in this specification includes but is not limited to these memories and any memory of another proper type.

It should be understood that, by way of example rather than limitative description, for example, the memory in embodiments of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), a direct rambus random access memory (Direct Rambus RAM, DR RAM), or the like. In other words, the memory in embodiments of this application includes but is not limited to these memories and any memory of another proper type.

An embodiment of this application further provides a computer-readable storage medium, configured to store a computer program.

Optionally, the computer-readable storage medium may be applied to the first network node in embodiments of this application, and the computer program causes a computer to perform corresponding procedures implemented by the first network node in a method in embodiments of this application. For brevity, details are not described herein again.

Optionally, the computer-readable storage medium may be applied to the AF entity in embodiments of this application, and the computer program causes a computer to perform corresponding procedures implemented by the AF entity in a method in embodiments of this application. For brevity, details are not described herein again.

Optionally, the computer-readable storage medium may be applied to the second network node in embodiments of this application, and the computer program causes a computer to perform corresponding procedures implemented by the second network node in a method in embodiments of this application. For brevity, details are not described herein again.

Optionally, the computer-readable storage medium may be applied to the IoT functional entity in embodiments of this application, and the computer program causes a computer to perform corresponding procedures implemented by the IoT functional entity in a method in embodiments of this application. For brevity, details are not described herein again.

An embodiment of this application further provides a computer program product, including computer program instructions.

Optionally, the computer program product may be applied to the first network node in embodiments of this application, and the computer program instructions cause a computer to perform corresponding procedures implemented by the first network node in a method in embodiments of this application. For brevity, details are not described herein again.

Optionally, the computer program product may be applied to the AF entity in embodiments of this application, and the computer program instructions cause a computer to perform corresponding procedures implemented by the AF entity in a method in embodiments of this application. For brevity, details are not described herein again.

Optionally, the computer program product may be applied to the second network node in embodiments of this application, and the computer program instructions cause a computer to perform corresponding procedures implemented by the second network node in a method in embodiments of this application. For brevity, details are not described herein again.

Optionally, the computer program product may be applied to the IoT functional entity in embodiments of this application, and the computer program instructions cause a computer to perform corresponding procedures implemented by the IoT functional entity in a method in embodiments of this application. For brevity, details are not described herein again.

An embodiment of this application further provides a computer program.

Optionally, the computer program may be applied to the first network node in embodiments of this application, and the computer program, when run by a computer, causes the computer to perform corresponding procedures implemented by the first network node in a method in embodiments of this application. For brevity, details are not described herein again.

Optionally, the computer program may be applied to the AF entity in embodiments of this application, and the computer program, when run by a computer, causes the computer to perform corresponding procedures implemented by the AF entity in a method in embodiments of this application. For brevity, details are not described herein again.

Optionally, the computer program may be applied to the second network node in embodiments of this application, and the computer program, when run by a computer, causes the computer to perform corresponding procedures implemented by the second network node in a method in embodiments of this application. For brevity, details are not described herein again.

Optionally, the computer program may be applied to the IoT functional entity in embodiments of this application, and the computer program, when run by a computer, causes the computer to perform corresponding procedures implemented by the IoT functional entity in a method in embodiments of this application. For brevity, details are not described herein again.

A person of ordinary skill in the art may be aware that, units and algorithm steps in examples described in combination with the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each specific application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to corresponding processes in the foregoing method embodiments, and details are not described herein again.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of the embodiments.

In addition, functional units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of a method in embodiments of this application. The foregoing storage medium includes various media that may store a program code, such as a USB flash drive, a removable hard disk, a read-only memory (Read-only Memory, ROM), a random access memory (Random Access Memory, RAM), a magnetic disk, or an optical disk.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application should be subject to the protection scope of the claims.

## Claims

1. A wireless communication method, comprising:
transmitting, by an application function AF entity, first information, wherein the first information is used to request to obtain information about a target Internet of Things IoT device; and
receiving, by the AF entity, second information, wherein the second information comprises the information about the target IoT device that the AF entity requests to obtain.

2. The method according to claim 1, wherein the first information comprises at least one of following information:
identity information of the target IoT device;
at least one information type, wherein the at least one information type is a type of the information about the target IoT device that the AF entity requests to obtain; or
time validity information corresponding to the at least one information type.

3. The method according to claim 2, wherein the time validity information corresponding to the at least one information type comprises target time period information corresponding to the at least one information type, and information of the at least one information type in a time period indicated by the target time period information is requested by the AF entity.

4. The method according to claim 2 or 3, wherein the identity information of the target IoT device is first identity information of the target IoT device, and the first identity information is used by the AF entity to identify the target IoT device; or
the identity information of the target IoT device is second identity information of the target IoT device, and the second identity information is used by a network node to identify the target IoT device.

5. The method according to any one of claims 2 to 4, wherein the method further comprises:
mapping, by the AF entity, first identity information of the target IoT device to second identity information of the target IoT device based on a first mapping relationship, wherein the first mapping relationship is a mapping relationship between first identity information and second identity information of IoT devices.

6. The method according to any one of claims 2 to 5, wherein the method further comprises:
determining, by the AF entity, a target IoT functional entity based on the identity information of the target IoT device, wherein the information about the target IoT device is obtained from the target IoT functional entity.

7. The method according to any one of claims 1 to 6, wherein the transmitting, by the application function AF entity, the first information comprises:
transmitting, by the AF entity, the first information to a first network node, wherein the first network node is used for exposure of network information.

8. The method according to claim 7, wherein the first network node is a network exposure function NEF entity.

9. The method according to claim 7 or 8, wherein the receiving, by the AF entity, the second information comprises:
receiving, by the AF entity, the second information transmitted by the first network node, wherein the second information is obtained by the first network node from a target IoT functional entity.

10. The method according to any one of claims 1 to 6, wherein the transmitting, by the application function AF entity, the first information comprises:
transmitting, by the AF entity, the first information to a target IoT functional entity.

11. The method according to claim 10, wherein the receiving, by the AF entity, the second information comprises:
receiving, by the AF entity, the second information transmitted by the target IoT functional entity.

12. A wireless communication method, comprising:
receiving, by an Internet of Things IoT functional entity, first information, wherein the first information is used by an application function AF entity to request to obtain information about a target Internet of Things IoT device; and
transmitting, by the IoT functional entity, second information, wherein the second information comprises the information about the target IoT device that the AF entity requests to obtain.

13. The method according to claim 12, wherein the first information comprises at least one of following information:
identity information of the target IoT device;
at least one information type, wherein the at least one information type is a type of the information about the target IoT device that the AF entity requests to obtain; or
time validity information corresponding to the at least one information type.

14. The method according to claim 13, wherein the time validity information corresponding to the at least one information type comprises target time period information corresponding to the at least one information type, and information of the at least one information type in a time period indicated by the target time period information is requested by the AF entity.

15. The method according to claim 13 or 14, wherein the method further comprises:
determining, by the IoT functional entity, the second information based on the time validity information in the first information and context information of the target IoT device that is stored in the IoT functional entity.

16. The method according to claim 15, wherein the determining, by the IoT functional entity, the second information based on the time validity information in the first information and the context information of the target IoT device that is stored in the IoT functional entity comprises:
if a time period corresponding to the context information of the target IoT device is different from a time period corresponding to the time validity information, obtaining, from a target communications node, information about the target IoT device in the time period corresponding to the time validity information, wherein the target communications node is a communications node that recently reports information about the target IoT device to the IoT functional entity.

17. The method according to claim 15 or 16, wherein the IoT functional entity stores context information of one or more IoT devices, and the context information of the IoT device comprises information about communication between at least one communications node and the IoT device and/or information about a life cycle in which the IoT functional entity serves the IoT device.

18. The method according to claim 17, wherein the information about the communication between the at least one communications node and the IoT device comprises at least one of the following:
time information of the communication between the at least one communications node and the IoT device; or
information content of the communication between the at least one communications node and the IoT device.

19. The method according to any one of claims 13 to 18, wherein the identity information of the target IoT device is first identity information of the target IoT device, and the first identity information is used by the AF entity to identify the target IoT device; or
the identity information of the target IoT device is second identity information of the target IoT device, and the second identity information is used by a network node to identify the target IoT device.

20. The method according to any one of claims 13 to 19, wherein the method further comprises:
mapping, by the IoT functional entity, first identity information of the target IoT device to second identity information of the target IoT device based on a first mapping relationship, wherein the first mapping relationship is a mapping relationship between first identity information and second identity information of IoT devices.

21. The method according to any one of claims 12 to 20, wherein the receiving, by the Internet of Things IoT functional entity, the first information comprises:
receiving, by the IoT functional entity, the first information transmitted by a first network node, wherein the first network node is used for exposure of network information.

22. The method according to claim 21, wherein the first network node is a network exposure function NEF entity.

23. The method according to claim 21 or 22, wherein the transmitting, by the IoT functional entity, the second information comprises:
transmitting, by the IoT functional entity, the second information to the first network node.

24. The method according to any one of claims 12 to 20, wherein the receiving, by the Internet of Things IoT functional entity, the first information comprises:
receiving, by the IoT functional entity, the first information transmitted by the AF entity.

25. The method according to claim 24, wherein the transmitting, by the IoT functional entity, the second information comprises:
transmitting, by the IoT functional entity, the second information to the AF entity.

26. A wireless communication method, comprising:
receiving, by a first network node, first information transmitted by an application function AF entity, wherein the first information is used by the AF entity to request to obtain information about a target Internet of Things IoT device; and
transmitting, by the first network node, second information to the AF entity, wherein the second information comprises the information about the target IoT device that the AF entity requests to obtain.

27. The method according to claim 26, wherein the first information comprises at least one of following information:
identity information of the target IoT device;
at least one information type, wherein the at least one information type is a type of the information about the target IoT device that the AF entity requests to obtain; or
time validity information corresponding to the at least one information type.

28. The method according to claim 27, wherein the time validity information corresponding to the at least one information type comprises target time period information corresponding to the at least one information type, and information of the at least one information type in a time period indicated by the target time period information is requested by the AF entity.

29. The method according to claim 27 or 28, wherein the identity information of the target IoT device is first identity information of the target IoT device, and the first identity information is used by the AF entity to identify the target IoT device; or
the identity information of the target IoT device is second identity information of the target IoT device, and the second identity information is used by a network node to identify the target IoT device.

30. The method according to any one of claims 27 to 29, wherein the method further comprises:
mapping, by the first network node, first identity information of the target IoT device to second identity information of the target IoT device based on a first mapping relationship, wherein the first mapping relationship is a mapping relationship between first identity information and second identity information of IoT devices.

31. The method according to any one of claims 27 to 29, wherein the method further comprises:
transmitting, by the first network node, first identity information of the target IoT device to a second network node, wherein the first identity information of the target IoT device is used to query second identity information of the target IoT device, and the second network node is used for storage of network information.

32. The method according to any one of claims 27 to 31, wherein the method further comprises:
determining, by the first network node, a target IoT functional entity based on the identity information of the target IoT device, wherein the information about the target IoT device is obtained from the target IoT functional entity.

33. The method according to any one of claims 27 to 31, wherein the method further comprises:
transmitting, by the first network node, the identity information of the target IoT device to a second network node, wherein the identity information of the target IoT device is used to determine a target IoT functional entity corresponding to the target IoT device, and the second network node is used for storage of network information.

34. The method according to any one of claims 26 to 33, wherein the method further comprises:
transmitting, by the first network node, the first information to a target IoT functional entity.

35. The method according to any one of claims 26 to 34, wherein the method further comprises:
receiving, by the first network node, the second information transmitted by a target IoT functional entity.

36. The method according to claim 31 or 33, wherein the second network node is a network repository function NRF entity.

37. The method according to any one of claims 26 to 36, wherein the first network node is a network exposure function NEF entity.

38. A wireless communication method, comprising:
receiving, by a second network node, first identity information of a target Internet of Things IoT device; and
determining a target IoT functional entity based on the first identity information of the target IoT device and/or mapping the first identity information of the target IoT device to second identity information of the target IoT device, wherein the first identity information is used by an application function AF entity to identify the target IoT device, and the second identity information is used by a network node to identify the target IoT device.

39. The method according to claim 38, wherein the determining the target IoT functional entity based on the first identity information of the target IoT device and/or mapping the first identity information of the target IoT device to the second identity information of the target IoT device comprises:
mapping, by the second network node, the first identity information of the target IoT device to the second identity information of the target IoT device based on a first mapping relationship, wherein the first mapping relationship is a mapping relationship between first identity information and second identity information of IoT devices.

40. The method according to claim 38 or 39, wherein the first identity information of the target IoT device is received from the application function AF entity, or is received from a first network node.

41. The method according to claim 40, wherein the first network node is a network exposure function NEF entity.

42. The method according to any one of claims 38 to 41, wherein the second network node is a network repository function NRF entity.

43. An application function AF entity, comprising:
a communications unit, configured to: transmit first information, wherein the first information is used to request to obtain information about a target Internet of Things IoT device; and
receive second information, wherein the second information comprises the information about the target IoT device that the AF entity requests to obtain.

44. An Internet of Things IoT functional entity, comprising:
a communications unit, configured to: receive first information, wherein the first information is used by an application function AF entity to request to obtain information about a target Internet of Things IoT device; and
transmit second information, wherein the second information comprises the information about the target IoT device that the AF entity requests to obtain.

45. A network node, comprising:
a communications unit, configured to: receive first information transmitted by an application function AF entity, wherein the first information is used by the AF entity to request to obtain information about a target Internet of Things IoT device; and
transmit second information to the AF entity, wherein the second information comprises the information about the target IoT device that the AF entity requests to obtain.

46. A network node, comprising:
a communications unit, configured to receive first identity information of a target Internet of Things IoT device; and
a processing unit, configured to determine a target IoT functional entity based on the first identity information of the target IoT device and/or map the first identity information of the target IoT device to second identity information of the target IoT device, wherein the first identity information is used by an application function AF entity to identify the target IoT device, and the second identity information is used by a network node to identify the target IoT device.

47. An application function AF entity, comprising a processor and a memory, wherein the memory is configured to store a computer program, and the processor is configured to invoke and run the computer program stored in the memory to perform the method according to any one of claims 1 to 11.

48. An Internet of Things IoT functional entity, comprising a processor and a memory, wherein the memory is configured to store a computer program, and the processor is configured to invoke and run the computer program stored in the memory to perform the method according to any one of claims 12 to 25.

49. A network node, comprising a processor and a memory, wherein the memory is configured to store a computer program, and the processor is configured to invoke and run the computer program stored in the memory to perform the method according to any one of claims 26 to 37.

50. A network node, comprising a processor and a memory, wherein the memory is configured to store a computer program, and the processor is configured to invoke and run the computer program stored in the memory to perform the method according to any one of claims 38 to 42.

51. A chip, comprising a processor, configured to invoke a computer program from a memory and run the computer program, so that a device on which the chip is installed performs the method according to any one of claims 1 to **11,** or the method according to any one of claims 12 to 25, or the method according to any one of claims 26 to 37, or the method according to any one of claims 38 to 42.

52. A computer-readable storage medium, configured to store a computer program, wherein the computer program causes a computer to perform the method according to any one of claims 1 to **11,** or the method according to any one of claims 12 to 25, or the method according to any one of claims 26 to 37, or the method according to any one of claims 38 to 42.

53. A computer program product, comprising computer program instructions, wherein the computer program instructions cause a computer to perform the method according to any one of claims 1 to **11,** or the method according to any one of claims 12 to 25, or the method according to any one of claims 26 to 37, or the method according to any one of claims 38 to 42.

54. A computer program, wherein the computer program causes a computer to perform the method according to any one of claims 1 to **11,** or the method according to any one of claims 12 to 25, or the method according to any one of claims 26 to 37, or the method according to any one of claims 38 to 42.
